# EUROPEAN PATENT SPECIFICATION

(11) **EP 4 095 407 B1**
(45) Date of publication and mention of the grant of the patent: **08.11.2023**
(21) Application number: 21211001.9
(22) Date of filing: 29.11.2021
(51) Int. Cl.: F16D 13/64, F16D 21/04, F16D 21/06, F16D 13/70

(54) **DUAL FRICTION CLUTCH FOR AN AUTOMATIC TRANSMISSION OF A MOTOR VEHICLE**
DOPPELREIBKUPPLUNG FÜR EIN AUTOMATISCHES FAHRZEUGGETRIEBE
EMBRAYAGE DE FRICTION DOUBLE POUR UNE BOITE DE VITESSE AUTOMATISSEE DE VEHICULE À MOTEUR

(30) Priority: 24.05.2021 PL 43793521
(43) Date of publication of application: 30.11.2022
(73) Proprietor: Akademia Gorniczo-Hutnicza im. Stanislawa Staszica w Krakowie, 30-059 Krakow (PL)
(72) Inventor: Bera, Piotr, 30-348 Kraków (PL)
(74) Representative: Wlasienko, Jozef

(56) References cited:
- CN-B- 108 349 368
- CN-B- 110 582 653
- DE-A1-102019 115 515
- ES-T3- 2 291 561
- GB-A- 2 078 879
- US-B1- 6 315 691

## Description

The subject of the invention is a dual friction clutch, intended for an automatic transmission of a motor vehicle, equipped with controlled actuators that switch individual stage gears.

In the design of various machines, there are sometimes conditions requiring the torque transmission path to be changed from an engine through a dual, disengaging friction clutch to a selected one of the two clutch shafts bearing mounted concentrically. Such conditions occur in the drive system of a road motor vehicle equipped with an automated stage transmission. The torque is supplied to the gearbox through a double friction clutch using one of the two clutch shafts selected by the control system, which are connected inside the transmission to intermediate shafts having output gears of odd or even gears mounted thereon. The most commonly used are dual, disengageable friction disc clutches, clamped alternately with levers controlled mechanically or hydraulically, with the task of quick shifting without interrupting the tractive force transmitted on the wheels. Couplings of such design presented i.a. in patents EP1985877B1 and DE102009053034B4 have a cover connected to an engine shaft and two shafts: an inner one and an outer one which are bearing mounted concentrically relative to each other and coaxially to the engine. A first clutch disc is seated on the inner shaft, a second clutch disc is seated on the outer shaft and there is a pressure plate between them rigidly connected to the clutch cover, acting at the same time as a flywheel. Both clutch discs are axially enclosed from the outside by friction surfaces of thrust plates, which are pressed against the pressure plate by clutch levers supported on the clutch cover and the lower ends of which are moved by axial release bearings. In the solution of EP1985877B1 the release bearing of the first thrust plate levers is moved by an external hydraulic actuator through a pusher guided inside the inner shaft axis, and the release bearing of the second thrust plate levers by a hydraulic actuator attached to the transmission body. In the clutch of DE 102009053034B4 - similarly to solutions of EP2326853B1 and EP3134658B1 - both release bearings are driven by hydraulic actuators attached to the transmission body, while the first thrust plate is driven by a separate pressure ring.

Various solutions are used in friction disc clutches in order to automatically adjust the axial clearance which compensates for the wear of friction surfaces, especially clutch disc linings. For example, such assemblies presented, i.a., in the patent descriptions EP0857261B1 and PL198488B1 are installed between the thrust plates and the clutch cover. They contain a thrust ring cooperating through axial wedge cuts with a thrust plate, and which is moved circumferentially by a worm gear driven by a ratchet wheel. See also GB 2078879, US6315691 as prior art.

The subject of the present invention is to provide a dual disc clutch design for an automatic transmission of a motor vehicle with a minimum shift time and an imperceptible loss of drive force of the vehicle wheels during a controlled gear change.

A clutch according to the invention comprises many features in common with the above-described known solutions: it comprises a clutch cover connected to a flywheel, and an inner shaft and an outer shaft bearing mounted concentrically relative to each other and coaxially relative to an engine shaft. First and second clutch disc and a pressure plate arranged therebetween are seated on the shafts. Both clutch discs are axially enclosed from the outside by friction surfaces of the flywheel and of a thrust plate axially supported on the clutch cover, wherein the clutch discs transfer the drive from the engine shaft to the selected inner or outer shaft alternatively clamped by actuators controlled by the fluid pressure. The essence of the solution lies in the fact that the pressure plate is slidably seated on the inner shaft by means of a cylinder of a double-action piston-type actuator, the piston of which, in the form of a ring set off from the inner shaft, separates two chambers on both sides, connected to a supply head through channels guided along the inner shaft.

Preferably, the thrust plate is supported on the clutch cover by means of an axial clearance adjustment assembly.

Moreover, it is intentional for the axial clearance adjustment assembly to have a thrust ring cooperating slidably with the thrust plate via an adjusting wheel having teeth and a thread, adjusted by a plate having a tooth and connected to the pressure plate.

Contrary to the previously known dual clutches, an overdrive of the clutch according to the invention is carried out by shifting the pressure plate directly by a coaxial hydraulic cylinder rigidly connected to it, without reducing the clearance in the intermediate elements.

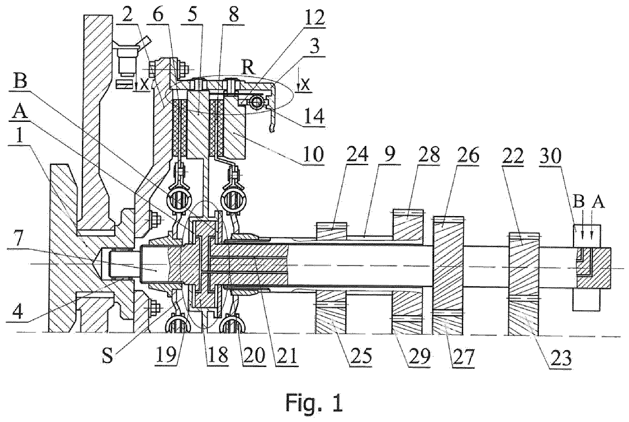

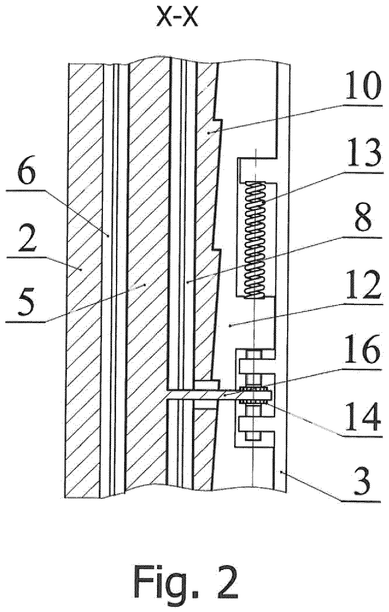

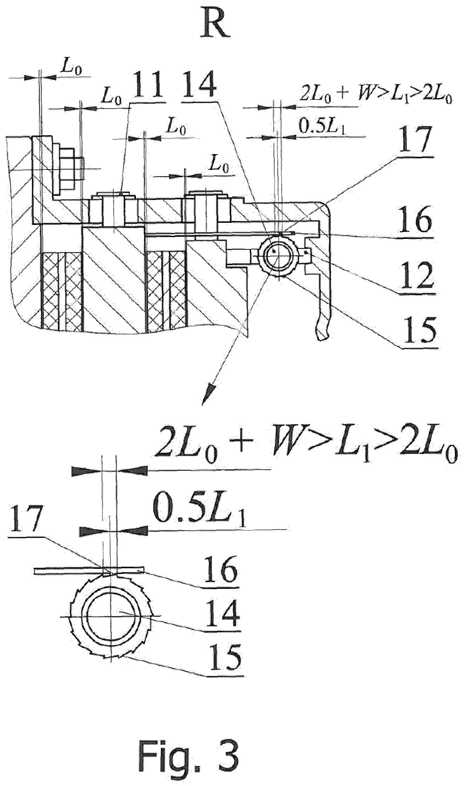

The dual clutch according to the invention is explained by the description of an exemplary embodiment shown in the drawing, in which Fig. 1 shows an axial section of a dual clutch connected to a four-speed transmission, Fig. 2 shows a section according to the line X-X indicated in Fig. 1 through a horizontal clearance adjusting assembly R, Fig. 3 shows an enlarged portion of the section of the horizontal clearance adjusting assembly R of Fig. 1, with indicated clearance and dimensional conditions of wear.

The clutch is connected to a crankshaft 1 of a combustion engine through the flywheel 2, to which a clutch cover 3 is screwed from the inside. In the space bounded by the flywheel 2 and the clutch cover 3 there are two clutch discs: a first clutch disc 6 and a second clutch disc 8, as well as a pressure plate 5 and a thrust plate 10. The first clutch disc 6 is responsible for transmitting the drive to the odd gears, cooperating on one side with the flywheel 2 and on the other side with the pressure plate 5. The second clutch disc 8 is located on the other side of the pressure plate 5 and on the transmission side it cooperates with the thrust plate 10 embedded in the clutch cover 3. The thrust plate 10 and the pressure plate 5 are connected to the clutch cover 3 by joint plates 11. The first clutch disc 6 is connected to an inner shaft 7 and the second clutch disc 8 is connected to the outer shaft 9. The pressure plate 5 is attached to a hydraulic actuator S which is slidably mounted on the inner shaft 7 through a cylinder 19, and its piston 18, made as an annular shoulder on this shaft, separates hydraulic chambers A and B on both sides, connected to a hydraulic head 30 through channels 20 and 21 guided along the inner shaft 7. Between the thrust plate 10 and the clutch cover 3 an axial clearance adjustment assembly R is situated which cooperates with notches on the thrust plate 10 through a thrust ring with axial wedge notches 12. The initial position of the ring 12 is determined by a pressure spring 13. A plate 16 having a tooth forms a part of the pressure plate 5. Under certain conditions, the tooth of the plate 17 acts on an adjusting wheel 14 having teeth spaced with a pitch Li and a thread. In the transmission, input gears of a first gear 22 and of a third gear 26 are permanently mounted on the internal shaft 7, input gears of a second gear 24 and of a fourth gear 28 are mounted on the outer shaft 9. Output gears of a first 23, second 25, third 27 and fourth 29 gears are rotatably mounted on an output shaft of the transmission.

When the vehicle starts to move, the drive from the crankshaft of the engine 1 is transmitted to the flywheel 2, the clutch cover 3 and the pressure plate 5. The increasing pressure in the channel 20 and in the chamber A of the hydraulic actuator S acts on the pressure plate 5, pressing it against the first clutch disc 6 and the flywheel 2, the effect of which is a frictional moment transmitted from the inner shaft 7 to the input gear of the first gear 22 and further to the output gear of the first gear 23. Before shifting to the second gear scheduled by the controller, the output gear of the second gear 25 is connected to the output shaft. The very switching to the second gear takes place when the pressure in the hydraulic system changes, when the pressure loss in the chamber A and the pressure increase in the chamber B will disengage the first clutch disc 6 and move the pressure plate 5 against the second clutch disc 8 with a pressure against the thrust plate 10. The disconnection time of both clutches is very short due to the small value of nominal clearances Lₒ between the friction surfaces. The automatic axial clearance adjustment assembly R, as a lining wear corrector, ensures a constant value of nominal clearances Lₒ during operation, and thus minimizes the stroke of the hydraulic actuator S and the clutch switching time. The regulation principle is based on the appropriate tooth spacing Li on the adjusting wheel 14. The tooth pitch L₁ greater than twice the nominal clearance Lₒ causes that the adjustment assembly R does not work until the minimum wear limit value W appears. The tooth 17 of the plate does not engage any of the adjacent teeth 15 on the adjusting wheel 14. When wear W occurs on any of the clutch discs 6 or 8, the tooth 17 of the plate acts on the tooth 15 of the wheel causing its rotation and circumferential displacement on the thread which rotates the thrust ring with wedge notches 12 and, as a result, moves the thrust plate 10 towards the flywheel 2, bringing the clearance between the clutch discs 6 and 8 and the cooperating friction surfaces of the flywheel 2, the pressure plate 5 and the thrust plate 10 to the required value of the nominal clearance Lₒ.

### List reference numbers in the drawing

1 - crankshaft of a combustion engine,
2 - flywheel,
3 - clutch cover,
4 - needle bearing centering the clutch shaft 1 with respect to the flywheel,
5 - pressure plate,
6 - first clutch disc,
7 - inner shaft,
8 - second clutch disc,
9 - outer shaft,
10 - thrust plate,
11 - joint plate,
12 - thrust ring with wedge notches,
13 - spring,
14 - adjusting wheel having teeth and a thread,
15 - wheel tooth,
16 - plate having a tooth,
17 - plate tooth,
18 - piston of actuator S,
19 - cylinder of actuator S,
20 - channel to chamber A,
21 - channel to chamber B,
22 - input gear of first gear,
23 - output gear of first gear,
24 - input gear of second gear,
25 - output gear of second gear,
26 - input gear of third gear,
27 - output gear of third gear,
28 - input gear of fourth gear,
29 - output gear of fourth gear,
30 - hydraulic gear with valves.
S - hydraulic actuator
A, B - hydraulic actuator chambers
R - axial clearance adjustment assembly
Lₒ - nominal clearance
L₁ - tooth pitch
W - boundary minimum wear value

## Claims

1. A dual friction clutch for an automatic transmission of a motor vehicle, comprising a clutch cover (3) connected to a flywheel (2), and an inner shaft (7) and an outer shaft (9) bearing mounted concentrically relative to each other and coaxially relative to an engine shaft, wherein first (6) and second (8) clutch discs and a pressure plate (5) arranged therebetween are seated on the shafts (7, 9), wherein both clutch discs (6, 8) are axially enclosed from the outside by friction surfaces of the flywheel (2) and of a thrust plate (10) axially supported on the clutch cover (3), wherein the clutch discs (6, 8) transfer the drive from the engine shaft (1) to the selected inner (7) or outer (9) shaft alternatively clamped by means of the controlled fluid pressure, **characterized in that** the pressure plate (5) is slidably seated on the inner shaft (7) by means of a cylinder (19) of a double-action piston-type actuator (S), the piston (18) of which, in the form of a ring set off from the inner shaft (7), separates two chambers (A and B) on both sides, connected to a supply head (30) through channels (20, 21) guided along the inner shaft (7).

2. The clutch according to claim 1, **characterized in that** the thrust plate (10) is supported on the clutch cover (3) by means of an axial clearance adjustment assembly (R).

3. The clutch according to claim 2, **characterized in that** the axial clearance adjustment assembly (R) has a thrust ring (12) cooperating slidably with the thrust plate (10) via an adjusting wheel (14) having teeth (15) and a thread, adjusted by a plate (16) having a tooth (17) and connected to the pressure plate (5).

## Patentansprüche

1. Doppelreibungskupplung für ein Automatikgetriebe eines Kraftfahrzeugs, die ein mit einem Schwungrad (2) verbundener Kupplungsdeckel (3) und konzentrisch zueinander und koaxial zu einer Motorwelle zueinander gelagerten Innenwelle (7) und Außenwelle (9) enthält, auf denen erste (6) und zweite (8) Kupplungsscheiben sowie eine dazwischen angeordnete Druckplatte (5) montiert sind, wobei beide Kupplungsscheiben (6, 8) von Reibflächen des Schwungrades (2) und einer auf Kupplungsdeckel (3) axial abgestützten Druckscheibe (10) von außen axial umschlossen sind und die abwechselnd mittels des gesteuerten Fluiddrucks festgespannte Kupplungsscheiben (6, 8) den Antrieb von der Motorwelle (1) an der gewählten inneren (7) oder äußeren (9) Welle übertragen **dadurch gekennzeichnet, dass** die Druckplatte (5), mittels eines Zylinders (19) eines doppeltwirkenden Kolbenantriebs (S), verschiebbar auf der Innenwelle (7) montiert ist, wobei der von der Innenwelle (7) abgesetzte ringförmige Kolben (18) beidseitig zwei Kammern (A und B) trennt, die über entlang der Innenwelle (7) geführte Kanäle (20, 21) mit einem Versorgungskopf (30) verbunden sind.

2. Kupplung nach Anspruch 1, **dadurch gekennzeichnet, dass** die Druckscheibe (10) mittels einer Axialspiel-Einstellanordnung (R) auf dem Kupplungsdeckel (3) abgestützt ist.

3. Kupplung nach Anspruch 2, **dadurch gekennzeichnet, dass** die Axialspiel-Einstellanordnung (R) einen Stützring (12) aufweist, der mit der Druckscheibe (10) über ein Stellrad (14) mit Zähnen (15) und Gewinde verschiebbar zusammenwirkt, eingestellt durch eine Platte (16), die einen Zahn (17) aufweist und mit der Druckplatte (5) verbunden ist.

## Revendications

1. Embrayage à double friction pour une transmission automatique de véhicule à moteur, qui contient un couvercle d'embrayage (3) relié à une roue volante (2) et un arbre intérieur (7) et un arbre extérieur (9) montés concentriquement l'un à l'autre et coaxialement à un arbre moteur, sur lesquels sont montés des premier (6) et deuxième (8) disques d'embrayage et un plateau de pression (5) disposé entre eux, les deux disques d'embrayage (6, 8) étant entourés axialement depuis l'extérieur par des surfaces de friction de la roue volante (2) et du manchon d'appui (10) supporté axialement sur le couvercle d'embrayage (3) et des disques d'embrayage (6, 8) serrés alternativement avec une pression de fluide contrôlée transfèrent l'entraînement de l'arbre moteur (1) à l'arbre interne (7) ou à l'arbre externe (9) sélectionné, **caractérisé en ce que** le plateau de pression (5), par l'intermédiaire d'un vérin (19) d'un piston d'entraînement à double effet (S), est monté coulissant sur l'arbre intérieur (7), et le piston (18), en forme de la bague décalé de l'arbre intérieur (7), sépare deux chambres (A et B) de part et d'autre, lesquelles sont reliés à une tête d'alimentation (30) par des canaux (20, 21) guidés le long de l'arbre intérieur (7).

2. Embrayage selon la revendication 1, **caractérisé en ce que** le manchon d'appui (10) est en appui sur le couvercle d'embrayage (3) au moyen d'un ensemble de réglage de jeu axial (R).

3. Embrayage selon la revendication 2, **caractérisé en ce que** l'ensemble de réglage de jeu axial (R) comporte une bague d'appui (12) qui coopère à coulissement avec le manchon d'appui (10) par l'intermédiaire d'une molette de réglage (14) à dents (15) et filets, ajusté par une plaque (16) comportant une dent (17) et reliée au plateau de pression (5).
